(19) Europäisches Patentamt

European Patent Office

Office européen des brevets

(11) Veröffentlichungsnummer: **0 271 712**
A2

(12) **EUROPÄISCHE PATENTANMELDUNG**

(21) Anmeldenummer: 87116642.7

(22) Anmeldetag: 11.11.87

(51) Int. Cl.⁴: **B60B 35/18**

(30) Priorität: 17.12.86 DE 3643081

(43) Veröffentlichungstag der Anmeldung:
22.06.88 Patentblatt 88/25

(84) Benannte Vertragsstaaten:
AT BE CH DE ES FR GB GR IT LI NL SE

(71) Anmelder: Bergische Achsenfabrik Fr. Kotz &
Söhne
Am Ohlerhammer
D-5276 Wiehl 1(DE)

(72) Erfinder: Steiner, Helmut, Ing.
Freiherr-vom-Stein-Strasse 1
D-5276 Wiehl 1(DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
D-4000 Düsseldorf 11(DE)

(54) Radlager.

(57) Gegenstand der Erfindung ist ein Radlager für Anhängerachsen mit auf einem Achsschenkel (2) angeordneten Kegelrollenlagern (5,6) und einer darauf drehbar gelagerten Nabe zum Befestigen einer Bremstrommel (24) und eines Rades oder eines TRILEX-Sternes, wobei die Nabe aus einer Innennabe (7) mit einer darauf drehfest befestigten Außennabe (14) besteht. Um das Radlager mit Notlaufeigenschaften zu versehen, wird vorgeschlagen, daß der Achsschenkel (2) zwischen den Kegelrollenlagern (5,6) konisch ausgebildet ist und zusammen mit der zwischen den Kegelrollenlagern (5,6) nach innen vorspringenden, ebenfalls konisch ausgebildeten Innennabe (7) ein Gleitlager (8) für den Notlauf bildet.

Fig. 2

## Radlager

Gegenstand der Erfindung ist ein Radlager für Anhängerachsen mit auf einem Achsschenkel angeordneten Kegelrollenlagern und einer darauf drehbar gelagerten Nabe zum Befestigen einer Bremstrommel oder eines Rades oder eines TRILEX-Sternes, wobei die Nabe aus einer Innennabe mit einer darauf drehfest befestigten Außennabe besteht.

Radlager mit geteilten Naben sind in verschiedenen Konstruktionen beispielsweise aus dem DE-GM 19 88 914 oder der CH-PS 316 313 bekannt. Der Sinn und Zweck einer geteilten Radnabe besteht darin, die Bremsbeläge in einer Trommelbremse erneuern zu können, ohne dafür die Nabenlagerung öffnen zu müssen. Deshalb wird auch die Bremstrommel an der Außennabe befestigt.. Die Bekannten Radlager mit einer geteilten Nabe haben jedoch keine Notlaufeigenschaften, wenn eines der beiden Kegelrollenlager beschädigt werden sollte.

Aus der DE-OS 23 19 264 ist ein Radlager mit einer ungeteilten Nabe bekannt, die mit Kugellagern auf einem Achsschenkel gelagert ist. In dem Bereich zwischen den Kugellagern folgt die Innenwand der Radnabe dem Verlauf des Achsschenkels, hält jedoch einen Abstand davon ein. Da der mittlere Teile der Radnabe zwischen den beiden Kugellagern keinem nützlichen Zweck dient, kann er entweder mit geradem oder mit konvex auf den Achsschenkel zu gerichtetem Verlauf ausgebildet sein. Dieses bekannte Radlager hat ebenfalls keine Notlaufeigenschaften.

Davon ausgehend liegt der Erfindung die **Aufgabe** zugrunde, ein einfach konstruiertes Radlager mit einer geteilten Nabe zu schaffen, welches Notlaufeigenschaften hat.

Als technische **Lösung** wird dafür ein Radlager vorgeschlagen, bei dem der Achsschenkel zwischen den Kegelrollenlagern konisch ausgebildet ist und zusammen mit der zwischen Kegelrollenlagern nach innen vorspringenden, ebenfalls konisch ausgebildeten Innennabe ein Gleitlager für den Notlauf bildet.

Bei dieser Konstruktion bietet es sich an, beiderseits der Innennabe Fettkammern auszubilden, die über wenigstens einen Kanal miteinander in Verbindung stehen, um die Fettversorgung der beiden Kegelrollenlager und im Falle eines Notlaufes natürlich auch des Gleitlagers sicherzustellen.

Bei einer praktischen Ausführungsform kann weiterhin die Außennabe im Bereich der Kegelrollenlager mit Konussitzen drehfest auf die Innennabe aufgepresst sein. Zusätzlich kann die drehfeste Verbindung zwischen der Außennabe und der Innennabe aus einer zwischen den Konussitzen angeordneten Verzahnung bestehen, die aus zwei an der Innennabe angeformten Nocken und mit diesen zusammenwirkenden Anschlägen an der Außennabe gebildet wird.

Ein erfindungsgemäß ausgebildetes Radlager hat nicht nur den **Vorteil**, daß es ausgesprochen wartungsfreundlich ist, weil die Trommelbremse durch Abziehen der Außennabe mit daran befestigtem Rad und Bremstrommel freigelegt werden kann, ohne dabei zwangsläufig auch die Nabenlagerung zu öffnen, sondern gleichzeitig auch noch den für die Verkehrssicherheit unschätzbaren **Vorteil** eines Notlauflagers zwischen dem Achsschenkel und der Nabe, wenn eines der beiden Kegelrollenlager beschädigt werden oder sogar zu Bruch gehen sollte. Im Falle eines Notlaufes kann sich die Nabe über den Innenkonus der Innennabe und das äußere Kegelrollenlager an den mit dem Achsschenkel verschraubten Achsmuttern abstützen.

Ein weiterer **Vorteil** des erfindungsgemäß ausgebildeten Radlagers besteht darin, daß entweder die Außennabe und die Bremstrommel oder die Außennabe und der TRILEX-Stern oder eine Felge einteilig ausgebildet und aus dem gleichen Werkstoff hergestellt sein können. Dadurch entfällt eine lösbare Verbindung zwischen zwei wichtigen Konstruktionsteilen, wodurch die Statik des Radlagers verbessert wird.

Weitere Einzelheiten und Vorteile ergeben sich aus der nachfolgenden Beschreibung der zugehörigen Zeichnungen, in denen verschiedene Ausführungsbeispiele eines erfindungsgemäß ausgebildeten Radlagers dargestellt worden sind. In den Zeichnungen zeigen:

Fig. 1 ein geschlossenes Radlager in Ansicht;

Fig. 2 dasselbe Radlager entlang der Linie II-II in Fig. 1 geschnitten in Seitenansicht ohne die Einzelteile der Trommelbremse;

Fig. 3 das Radlager entlang der Linie III-III in Fig. 2 geschnitten;

Fig. 4 ein Radlager mit einteilig ausgebildeter Innennabe und Bremstrommel im Schnitt;

Fig.5 ein Radlager mit einteilig ausgebildeter Innennabe und TRILEX-Stern.

Am Ende eines Achskörpers 1 ist ein Achsschenkel 2 befestigt oder angeformt, der mit zwei im Abstand voneinander angeordneten Lagersitzen 3,4 für ein inneres Kegelrollenlager 5 und ein äußeres Kegelrollenlager 6 versehen ist. Zwischen den beiden Kegelrollenlagern, 5,6 ist der Achsschenkel 2 konisch ausgebildet.

Auf den beiden Kegelrollenlagern 5,6 ist eine Innennabe 7 drehbar angeordnet, die zwischen den

2

beiden Kegelrollenlagern 5,6 einen nach innen vorspringenden und an den Konus des Achsschenkels 2 angepassten Innenkonus hat, der zusammen mit dem Achsschenkel 2 ein Gleitlager 8 mit Notlaufeigenschaften bildet.

Die beiden Kegelrollenlager 5,6 werden mittels eines innenliegenden Stoßringes 9, der Innennabe 7 und an der Außenseite auf den Achsschenkel 2 aufgeschraubter Achsmuttern 10,11 mit einem mit dazwischen angeordneten Sicherungsblech in ihrer Position auf den Lagersitzen 3,4 fixiert. An den Innen-und Außenseiten ist das Radlager mit Dichtungen 12,13 abgedichtet.

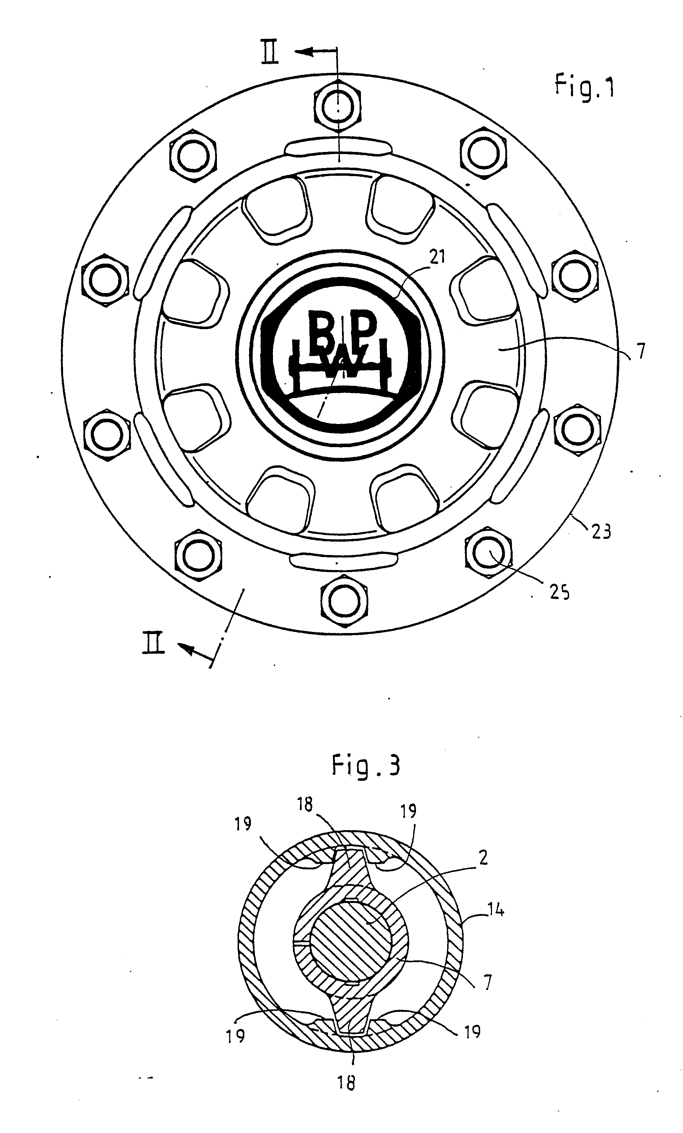

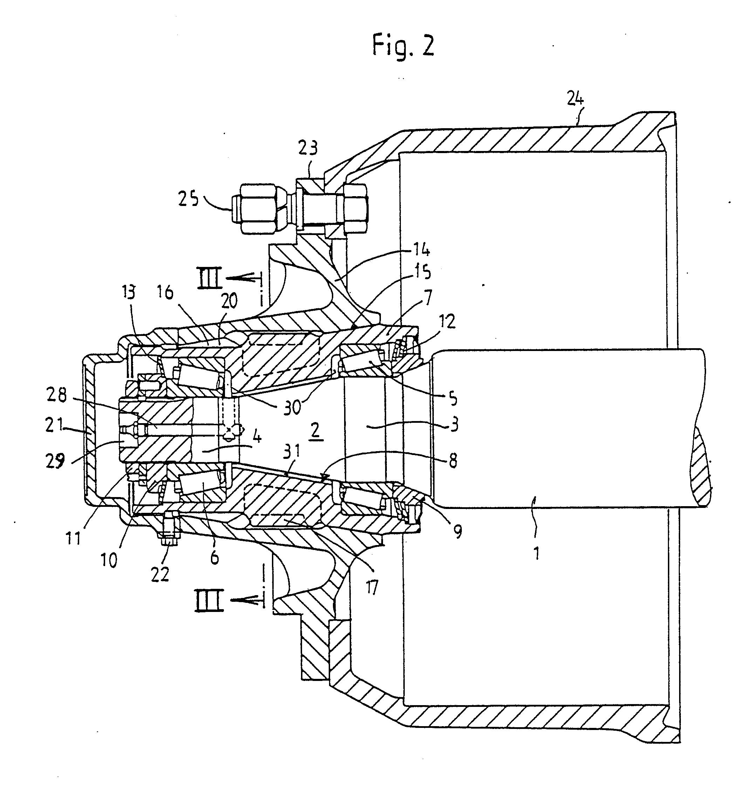

In dem Ausführungsbeispiel gem. den Fig. 1 bis 3 ist auf die Innennabe 7 eine Außennabe 14 aufgeschoben und mittels Konussitzen 15,16 in ihrer Position fixiert. Zwischen der Innennabe 7 und der Außennabe 14 ist als Verdrehsicherung eine Verzahnung 17 angeordnet, die gem. der Schnittzeichnung in der Fig. 3 aus an der Innennabe 7 angeformten Nocken 18 und an der Außennabe angeformten Anschlägen 19 besteht. Damit die Anschläge 19 bei der Montage über die Innennabe 7 geschoben werden können, sind in dem äußeren Konussitz 16 Montageausnehmungen 20 vorgesehen.

Die auf die Innennabe 7. aufgeschobene Außennabe 14 wird einerseits durch den Reibungswiderstand in den Konussitzen 15,16 und andererseits zusätzlich mit einer auf die Innennabe 7 aufgeschraubten Radkapsel 21 in ihrer Position festgehalten. Die Radkapsel 21 ist zusätzlich mit einer Sicherungsschraube 22 an der Innennabe 7 fixiert.

In dem Ausführungsbeispiel gem. Fig. 2 ist die Außennabe 14 mit einem Befestigungsflansch 23 versehen, an dem auf der Innenseite eine Bremstrommel 24 und an der Außenseite mittels Radbolzen 25 ein -nicht dargestelltes-Rad befestigt werden können.

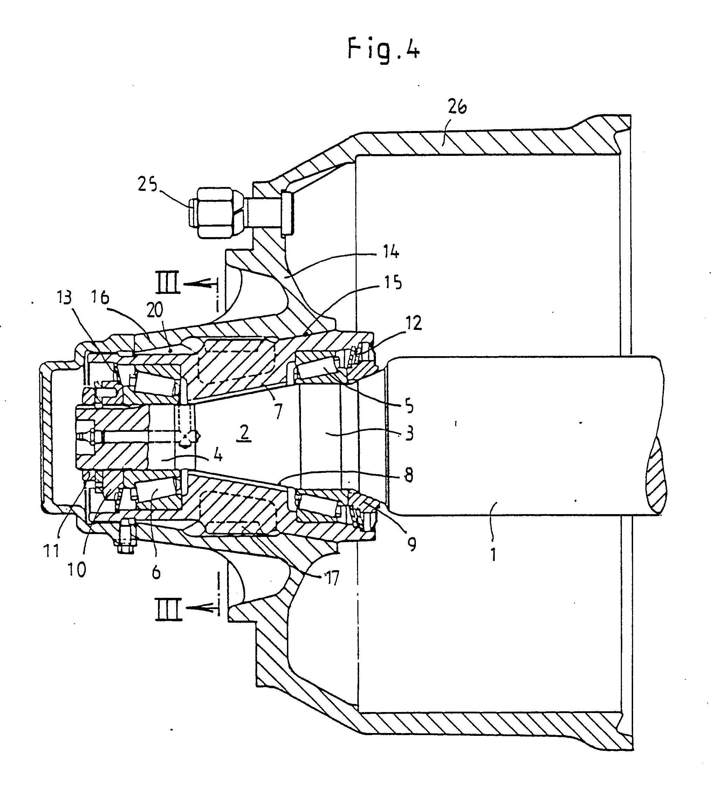

In dem Ausführungsbeispiel gem. Fig. 4 sind die Außennabe 14 und Bremstrommel 24 als Trommelnabe 26 einteilig ausgebildet. An dieser Trommelnabe 26 kann das -nicht dargestellte-Rad ebenfalls mit Radbolzen 25 befestigt werden.

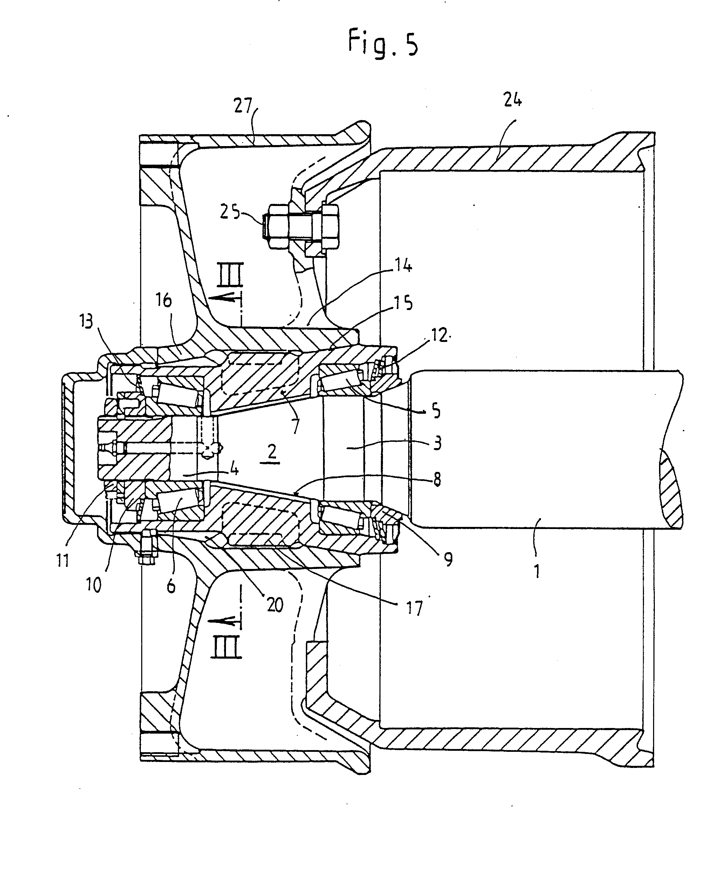

In dem Ausführungsbeispiel gem. Fig. 5 ist die Außennabe 14 als TRILEX-Nabe 27 einteilig ausgebildet. An dieser TRILEX-Nabe 27 kann wiederum mit Radbolzen 25 auf der Innenseite eine Bremstrommel 24 befestigt werden.

In dem Achsschenkel 2 ist ein Schmierkanal 28 mit einem außenliegenden Nippel 29 zum Abschmieren der beiden Kegelrollenlager 5,6 vorgesehen. Um eine gute Fettverteilung zu gewährleisten sind beiderseits der Innennabe 7 Fettkammern 30 vorgesehen, die über in der Lauffläche angeordnete Kanäle 31 miteinander in Verbindung stehen.

Wenn die Trommelbremse für Bremsuntersuchungen oder eine Erneuerung der Bremsbeläge geöffnet werden muß, wird dazu die Radkapsel 21 geöffnet und danach die Außennabe 14 einschließlich Rad und Bremstrommel von der Innennabe abgezogen. Dabei bleibt die Nabelagerung geschlossen. Es ist deshalb nicht notwendig, die Nabenlagerung nach den Wartungsarbeiten wieder zu säubern und neu abzuschmieren. Diese Montagetechnik führt in der rauhen Praxis von Speditionsunternehmen zu einer ganz erheblichen Montageerleichterung und stellt gleichzeitig auch einen Beitrag zur Verkehrssicherheit dar.

Bei einem Bruch oder Schaden der Kegelrollenlager 5,6 übernimmt das Gleitlager 8 den Notlauf. Dabei stützt sich die Innennabe 7 über das Kegelrollenlager 6 bzw. dessen Innenring und die Achsmuttern 10,11 am Achsschenkel 2 ab.

## Bezugszeichenliste

1. Achskörper
2 Achsschenkel
3 Lagersitz
4 Lagersitz
5 Kegelrollenlager (inneres)
6 Kegelrollenlager (äußeres)
7 Innennabe
8 Gleitlager
9 Stoßring
10 Achsmutter
11 Achsmutter
12 Dichtung
13 Dichtung
14 Außennabe
15 Konussitz (innerer)
16 Konussitz (äußerer)
17 Verzahnung
18 Nocken
19 Anschlag
20 Montageausnehmung
21 Radkapsel
22 Sicherungsschraube
23 Befestigungsflansch
24 Bremstrommel
25 Radbolzen
26 Trommelnabe
27 Trilexnabe
28 Schmierkanal
29 Nippel
30 Fettkammer
31 Kanal

**Ansprüche**

1. Radlager für Anhängerachsen mit auf einem Achsschenkel angeordneten Kegelrollenlagern (5,6) und einer darauf drehbar gelagerten Nabe zum Befestigen einer Bremstrommel (24) und eines Rades oder eines TRILEX-Sternes, wobei die Nabe aus einer Innennabe (7) mit einer darauf drehfest befestigten Außennabe (14) besteht,
**dadurch gekennzeichnet,**
daß der Achsschenkel (2) zwischen den Kegelrollenlagern (5,6) konisch ausgebildet ist und zusammen mit der zwischen den Kegelrollenlagern (5,6) nach innen vorspringenden, ebenfalls konisch ausgebildeten Innennabe (7) eine Gleitlager (8) für den Notlauf bildet.

2. Radlager nach Anspruch 1, dadurch gekennzeichnet, daß beiderseits der Innennabe (7) Fettkammern (30) ausgebildet sind, die über wenigstens einen Kanal (31) miteinander in Verbindung stehen.

3. Radlager nach Anspruch 1, dadurch gekennzeichnet, daß die Außennabe (14) im Bereich der Kegelrollenlager (5,6) mit Konussitzen (15,16) drehfest auf die Innennabe (7) aufgepresst ist.

4. Radlager nach Anspruch 1, dadurch gekennzeichnet, daß die drehfeste Verbindung zwischen der Innennabe (7) und der Außennabe (14) aus einer zwischen den Konussitzen (15,16) angeordneten Verzahnung (17) besteht.

5. Radlager nach Anspruch 4, dadurch gekennzeichnet, daß die Verzahnung (17) aus zwei an der Innennabe (7) angeformten Nocken (18) und mit diesen zusammenwirkenden Anschlägen (19) an der Außennabe (14) besteht.

6. Radlager nach Anspruch 1, dadurch gekennzeichnet, daß die Außennabe (14) und die Bremstrommel (24) einteilig ausgebildet sind und eine Trommelnabe (26) bilden.

7. Radlager nach Anspruch 1, dadurch gekennzeichnet, daß die Außennabe (14) und der TRILEX-Stern einteilig ausgebildet sind und eine TRILEX-Nabe (27) bilden.

8. Radlager nach Anspruch 1, dadurch gekennzeichnet, daß die Außennabe (14) und eine Radfelge einteilig ausgebildet sind und eine Felgennabe bilden.

0 271 712

Fig.1

Fig.3

# Fig. 2

## Fig.4

Fig. 5